# EUROPEAN PATENT APPLICATION

(11) **EP 2 905 883 A1**
(43) Date of publication of application: **12.08.2015**
(21) Application number: 13844474.0
(22) Date of filing: 09.08.2013
(51) Int. Cl.: H02K 41/02, H02P 25/06, B60L 13/03

(54) **TWO-PHASE TWO-COLUMN LINEAR PULSE MOTOR PROPULSION SYSTEM**

(30) Priority: 04.10.2012 KR 20120110169
(71) Applicant: Korea Railroad Research Institute, Uiwang-si, Gyeonggi-do 437-757 (KR)
(72) Inventor: LEE, Byung Song, Anyang-si Gyeonggi-do 431-060 (KR); LEE, Hyung Woo, Seoul 140-723 (KR); PARK, Chan Bae, Uiwang-si Gyeonggi-do 473-120 (KR); HONG, Soon Man, Seoul 137-042 (KR); LEE, Jun Ho, Anyang-si Gyeonggi-do 431-085 (KR); KIM, Jae Hee, Suwon-si Gyeonggi-do 443-809 (KR)
(74) Representative: Petraz, Gilberto Luigi
(86) International application number: PCT/KR2013/007194
(87) International publication number: WO 2014/054853

(57) **Abstract**

The present invention relates to a two-phase, two-column linear pulse motor propulsion system, and more particularly to a two-phase, two-column linear pulse motor propulsion system which can implement high-speed driving, stopping, and switching directions forward/backward through non-adhesive driving characteristics by improving accelerating performance and torque performance.

The two-phase, two-column linear pulse motor propulsion system comprises a field unit 121, 122 prepared in two columns in the longitudinal direction under a moving body 110 so as to generate a magnetic field; an armature unit 131, 132 which is prepared on a travelling track, generates a shifting field by the power supplied from a power conversion device, is prepared in two columns so as to correspond to the two-column field unit 121, 122 and generates the propulsion force of the moving body 110 through interaction due to a two-phase synchronous signal. Thus, it can improve propulsion force and acceleration/deceleration performance, compared to a linear propulsion system with one phase.

## Description

### Technical Field

The present invention relates to a two-phase, two-column linear pulse motor propulsion system, and more particularly to a two-phase, two-column linear pulse motor propulsion system which can implement high-speed driving, stopping, and switching directions forward/backward through non-adhesive driving characteristics by improving accelerating performance and torque characteristic.

### Background Art

In general, acceleration/deceleration performance of a railway vehicle is set up in consideration of the weight of a vehicle and performance of its propulsion system. In case there are many stops like Korean railways, improvement of acceleration/deceleration performance is important in decreasing train headway and the overall time required.

A normal railway vehicle uses a Wheel On Rail method, i.e., an adhesive driving method. Therefore it has the limit of velocity above adhesive limit (approx. 430km/h).

An electrical railway vehicle drives a traction motor through a main auxiliary power system (SIV) supplies electricity needed for air conditioning systems, lighting, telecommunications, etc.

The torque generated by a traction motor is transformed into mechanical energy of a low speed and high torque through a deceleration gear, and the mechanical energy generates a driving force by frictional force between wheels of railway vehicle and rail.

Particularly, large torque and control force are needed in an acceleration and deceleration section. However, torque lower than that is only needed in an actual drive. Thus, in general a traction motor is designed and produced for a continuous rating requirement for actual drive.

While starting up, traction is generated by putting more current than continuous rating of a traction motor. However, momentary rating is limited to 1.5-2 times continuous rating.

Thus, conventional electrical railway vehicles have difficulties in acceleration/deceleration performance or improvement of high-speed driving, by a capacity limit of propulsion system, weight of a vehicle, limit of power supply, adhesive limit, etc.

For example, a traction motor with high capacity can be used for improvement of acceleration/deceleration performance, but weight increase of a vehicle lowers driving efficiency in a general driving section other than an acceleration and deceleration section.

In case a traction motor with higher output density is used in order to avoid the problem above, the problem with weight increase of a railway vehicle can be solved. However, it is difficult to apply practically because of a limit of power supply in a railway vehicle, and a capacity increase of a railway vehicle line.

Even though a traction motor with large capacity is applied to improve super-high speed driving performance, super-high speed driving is not possible because of a slippery wheel due to an adhesive limit in the Wheel On Rail method.

Meanwhile, a two-phase linear motor is disclosed for improving power generation efficiency with a large output in Korean Patent registered No. 10-0440389 (registration date: 5 July, 2004).

The registered patent above suggests a two phase lateral permanent magnet type excited linear motor in which a pair of one phase permanent magnet excited linear motors are arranged in a way that a respective mover of the pair faces each other. However, there is a problem that a stator takes up a lot of space for installment in which a stator is arranged above and below structurally.

### Disclosure

### Technical Problem

The present invention is for solving the problem of the conventional technology, and particularly providing a two-phase, two-column linear pulse motor propulsion system which can implement function of high-speed driving, stopping, switching forward/reverse direction through non-adhesive driving characteristics by improving acceleration performance, torque characteristic and comprise a compact stator (in an armature side).

### Technical Solution

The two-phase, two-column, linear pulse motor propulsion system according to the present invention for accomplishing these objectives comprises a field unit prepared in two columns in the longitudinal direction under a moving body so as to generate a magnetic field; an armature unit which is prepared on a travelling track, generates a shifting field by the power supplied from a power conversion device, is prepared in two columns so as to correspond to the two-column field unit and generates the propulsion of the moving body through an interaction due to a two-phase synchronous signal.

Preferably, according to the present invention the field unit consists of two columns, which have a phase difference of 180° to each other. Preferably, the field unit consists of a permanent magnet or a super-conducting magnet.

Preferably, according to the present invention the field unit consists of a super-conducting magnet, is modularized as a unit, and a plurality of units are prepared under a moving body.

Preferably, according to the present invention, the armature unit arranged in two columns comprises an A-phase coil unit of which each column is winded in such way that the winding is twisted at regular intervals in longitudinal direction of a traveling track and the adjacent sections have the opposite magnetic field direction, and a B-phase coil unit having the same configuration as the A-phase coil unit with a phase difference of 90° in a longitudinal direction.

Preferably, according to the present invention, in an inclining section or acceleration/deceleration section of a travelling track, the armature unit is provided by an iron core type coil.

Preferably, according to the present invention, the armature unit is laid underground or installed on the ground by a support.

Preferably, according to the present invention, the power applied to the armature unit is direct pulse current, alternating current of a sinusoidal wave or a square wave.

### Advantageous Effects

The two-phase, two-column linear pulse motor propulsion system according to the present invention comprises a field unit prepared in two columns in the longitudinal direction under a moving body; and an armature unit which is prepared in two columns so as to correspond to the two-column field unit respectively and generates propulsion of the moving body through interaction due to a two-phase synchronous signal. Thus, compared to a one-phase linear propulsion system, it can improve propulsion force and acceleration/deceleration performance.

In addition, a conventional linear propulsion system arranged in one column cannot generate starting torque, has a bad torque characteristic while driving, and cannot implement a switching forward/reverse direction. However the two-phase, two-column linear pulse motor propulsion system can solve the problems of the conventional one-column linear propulsion system and improve high-speed driving performance and acceleration/deceleration performance due to weight reduction of a rail vehicle because power supply device such as a catenary and a pantograph, power converters, traction motors, and energy conversion devices mounted on a conventional railway vehicle are not needed.

### Description of Drawings

FIG. 1 illustrates a two-phase, two-column linear pulse motor propulsion system according to the present invention.
FIG. 2 illustrates a preferable embodiment of an armature unit according to the propulsion system according to the present invention.
FIGS. 3 (a) and (b) illustrate a working example of the propulsion system according to the present invention.

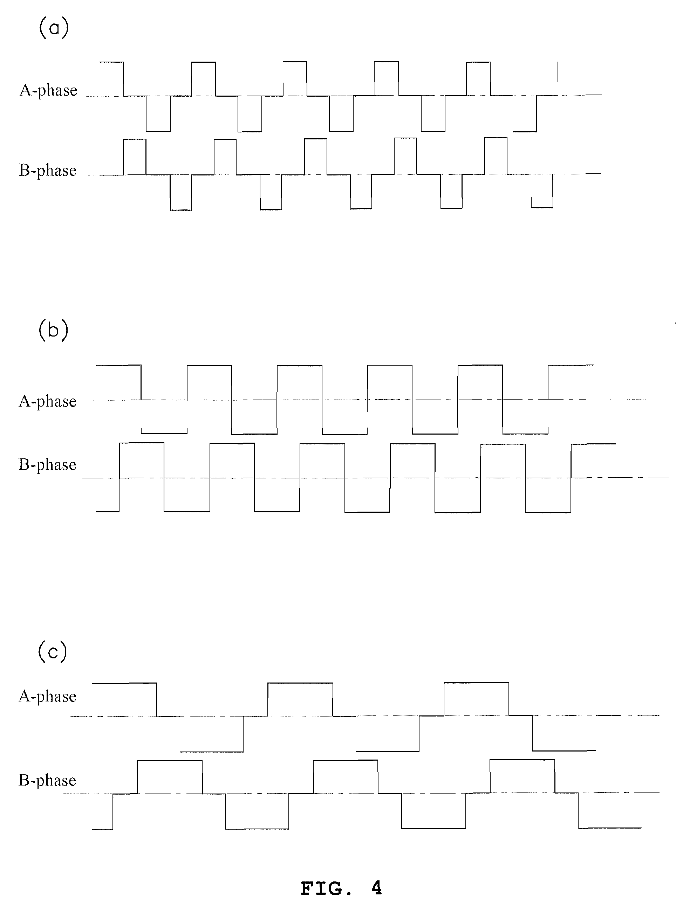

FIGS. 4 (a), (b), and (c) illustrate various wave forms of current which can be applied to an armature unit in the propulsion system according to the present invention.

### <Description of the Reference Numerals in the Drawings>

110: moving body
121, 122: field unit
131, 132: armature unit
131a: A-phase coil unit
131b: B-phase coil unit

### Best Mode

Specific configuration or functional descriptions which set forth in exemplary embodiments according to the present invention are only for the purpose of describing exemplary embodiments, and the exemplary embodiments according to the concept of the present invention can be practiced in various forms. Thus the present invention is not limited to the described exemplary embodiments and all of appropriate variations, modifications and equivalents are considered to pertain to the scope of the present invention.

Specific exemplary embodiment of the present invention will be explained from the following detailed description when taken in conjunction with the accompanying drawings as follows.

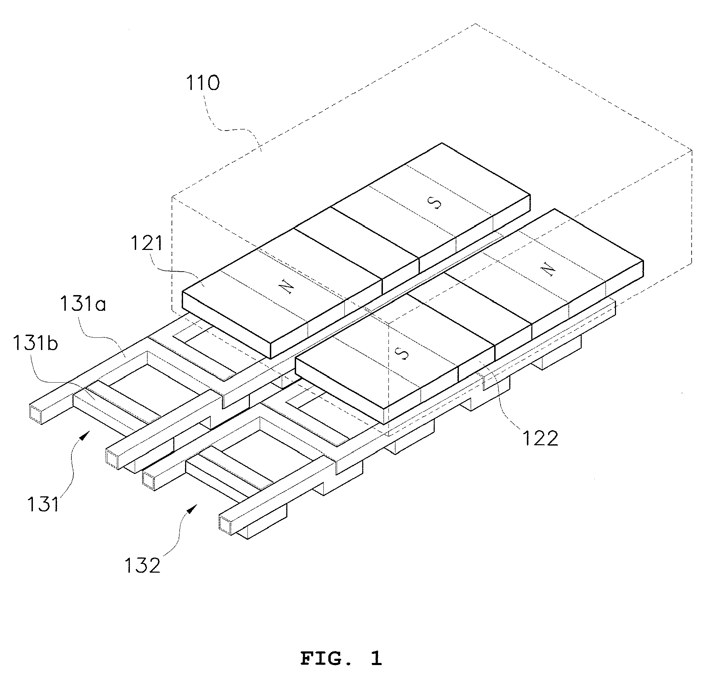

With reference to FIG. 1, a two-phase, two-column linear pulse motor propulsion system comprises a field unit 121, 122 prepared in two columns in the longitudinal direction under a moving body 110 so as to generate a magnetic field; and an armature unit 131, 132 which is prepared on a travelling track, generates a shifting field by the power supplied from a power conversion device, is prepared in two columns so as to correspond to the two-column field unit 121, 122 respectively and generates the propulsion of the moving body through interaction by a two-phase synchronous signal.

In the exemplary embodiment a moving body 110 is defined only as a railway vehicle. However, the moving body is not limited only to a railway vehicle.

A field unit 121, 122 prepared in two columns is arranged under the moving body 110. The field unit 121, 122 is for generating a constant magnetic field and can be provided by a permanent magnet or a super-conducting magnet of a low temperature or room temperature. It should be understood that there can be added equipment such as cryostat needed for operation of a super-conducting magnet or power supply, which can supply required power according to a means for generating a magnetic field such as an electromagnet or a super-conducting magnet of a low temperature or room temperature.

FIG. 1 shows permanent magnets in two columns side by side as a field unit under a moving body, and preferably a field unit 121, 122 consists of two (2) columns which have a phase difference of 180° to each other.

FIG. 1 shows concisely a field unit 121, 122 comprising only one pair of permanent magnets, but more preferably the field unit 110 is provided by a super-conducting magnet, is modularized as a unit, and a plurality of units can be prepared under a moving body 110 so as to increase torque.

Particularly in the present invention a field unit under a moving body 110 which is provided by a super-conducting magnet is modularized as a unit and mounted. Thus, maintenance can be easier because replacement or repair upon malfunction can be done by a module unit. In addition, the field unit is provided in a modularized unit, thus actuating power is distributed and operation of a moving body is possible even upon malfunction of some modules.

An armature unit 131, 132 is prepared in two columns along a travelling track on the ground, generates a shifting field by a two-phase synchronous signal and the power supplied from a power conversion device (not illustrated) adjacent to the travelling track so as to generate driving power needed for driving a moving body 110 by an interaction with the field unit 110.

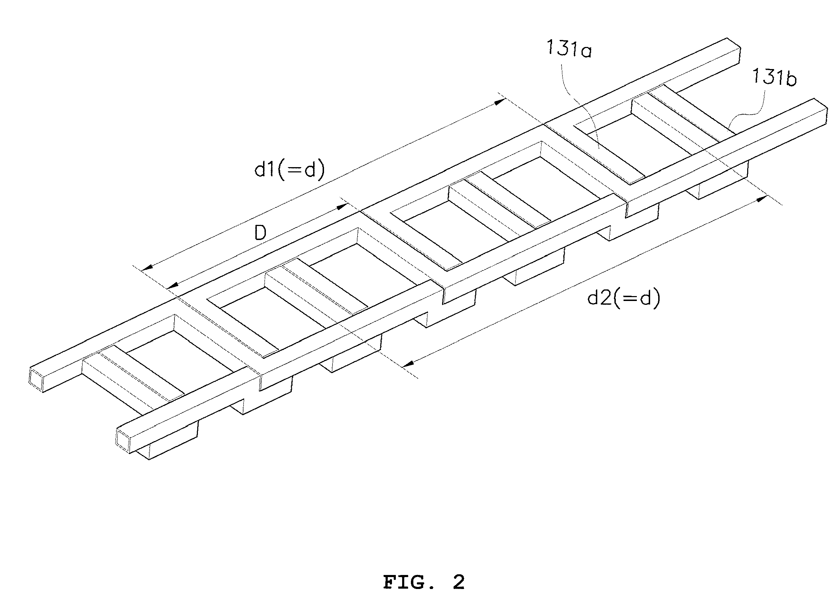

As illustrated in FIG. 2, preferably according to the present invention, an armature unit 131 arranged in two columns comprises an A-phase coil unit 131a of which each column is winded in such way that the winding is twisted at regular intervals in a longitudinal direction of a traveling track and the adjacent sections have the opposite magnetic field direction, and a B-phase coil unit 131b having the same configuration as A-phase coil unit 131a with a phase difference of 90°.

A-phase coil unit 131a is winded in such way that the winding is twisted at regular length D, and constant unit section length d1 (d1=2D) is repeated structurally. If the power is applied to A-phase coil unit 131a from a power conversion device, two adjacent sections with a twisted position as their centers have a magnetic field generated in opposite direction of each other.

B-phase coil unit 131b has the same structure as A-phase coil unit 131a has, wherein unit section length d2 is identical to section length d1 of A-phase coil unit 131a with phase difference of 90°.

A well-known insulator is prepared between A-phase coil unit 131a and B-phase coil unit 131b in such way that A-phase coil unit 131a and B-phase coil unit 131b are electrically insulated.

Thus, an armature unit 131, 132 in two columns comprising A-phase coil unit and B-phase coil unit is prepared so as to have the identical phase to each other.

Meanwhile, overall cost can be reduced by using an air core coil for an armature unit 131, 132, preferably, in an acceleration/deceleration section in a railway station or an inclining section of travelling track for a railway vehicle. An iron core type coil in which uneven type electrical core is installed between a winding is provided so as to enhance propulsion force according to the characteristic of running section.

In the present invention, an armature unit 131, 132 is installed underground. Thus, damaging surroundings can be prevented by excluding an aerial cable for a train vehicle and environment-friendly railway system can be constructed. Meanwhile, an armature unit 131, 132 can be installed at a certain level above the ground by using a support.

Thus, an armature unit 131, 132 configured in two-phase and two-columns is supplied with power through a power conversion device so as to generate a shifting field, and a non-adhesive driving force is generated by an interaction with a field unit of a moving body.

In the present invention, a direct pulse current or an alternating current of a square wave or a sinusoidal wave can be used as the power applied to the armature unit.

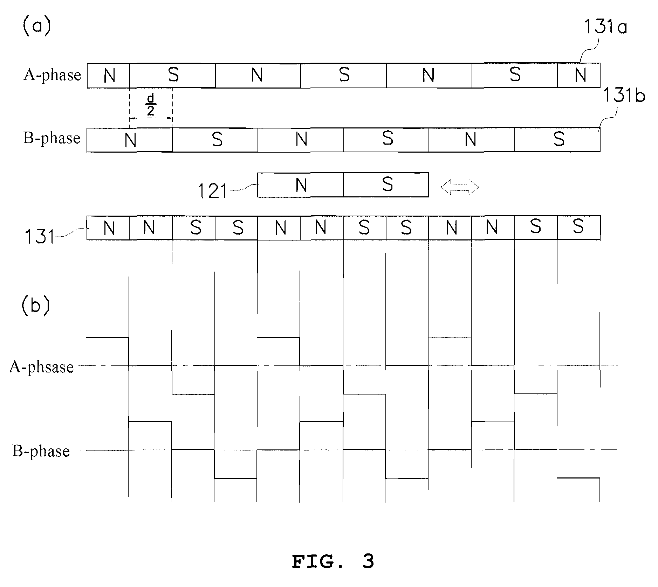

FIGS. 3 (a) and (b) illustrate a working sample of the propulsion system according to the present invention and describes a working sample for an armature unit in one column. However, it needs to be understood that the working sample can also apply to an armature unit in two columns.

When AC power of a square wave having a phase difference 90° for A-phase coil unit and B-phase coil unit is applied through a power converter for an armature unit in one column as illustrated in FIG. 3 (b), a shifting field is generated in an armature unit 131 in one column by N or S pole magnetic field generated by each coil unit 131a, 131b like (a) and propulsion force is generated by an interaction with magnetic field of the relevant field unit 121 by a shifting field generated in the armature unit 131 in one column.

Meanwhile, a field unit 121,122 in two columns which is located over a two-column armature unit 131,132, has phase difference of 180° to each other, and is prepared under a moving body 10 so as to switch direction forward/backward by AC power of a square wave (or DC pulse) applied to the armature unit 131, 132.

For the two-phase, two-columns linear pulse motor propulsion system according to the present invention as configured as above, an armature unit is installed under a railway vehicle, an armature unit is prepared between the ground track so as to provide propulsion force of a railway vehicle by non-adhesive driving force and enhance the performance at inclining section or deceleration and acceleration section. Also high-speed driving is possible by applying to a railway vehicle of a Wheel On Rail method.

In addition, a power supply device such as a catenary or a pantograph, power converters such as transformers, converters, inverters, and energy conversion devices such as rotation type traction motor and gear as shown in conventional propulsion system of an electric railway vehicle are not needed to be mounted on the vehicle, and power is supplied directly to an armature unit of the ground track so as to enable the running of a railway vehicle. Thus, a weight reduction of a railway vehicle can enhance deceleration and acceleration performance and improve high-speed driving performance.

In addition, power loss can be decreased by using DC or AC power of a square wave compared to conventional linear synchronous motor propulsion, and configuration of the ground power conversion device can be simplified.

The present invention described above is not limited by the aforementioned embodiments and the accompanying drawings. It will be apparent to those who are skilled in the art that various substitutions, variations and modifications without departing from the scope of the spirit of the invention are possible.

## Claims

1. A two-phase, two-column, linear pulse motor propulsion system, comprising:
a field unit prepared in two columns in the longitudinal direction under a moving body so as to generate a magnetic field; and
an armature unit for which is prepared on a travelling track, generates a shifting field by the power supplied from a power conversion device, is prepared in two columns so as to correspond to the two-column field unit, and generates the propulsion of the moving body through interaction by a two-phase synchronous signal.

2. The two-phase, two-column linear pulse motor propulsion system according to claim 1, wherein the field unit consists of two columns which have phase difference of 180° to each other.

3. The two-phase, two-column linear pulse propulsion system according to claim 1 or claim 2, wherein the field unit is a permanent magnet or a super-conducting magnet.

4. The two-phase, two-column linear pulse propulsion system according to claim 1 or claim 2, wherein the field unit is a super-conducting magnet, is modularized as a unit, and a plurality of units are prepared under a moving body so as to increase torque.

5. The two-phase, two-column linear pulse propulsion system according to claim 1, wherein the armature unit arranged in two columns comprises A-phase coil unit of which each column is winded in such way that the winding is twisted at regular intervals in longitudinal direction of a traveling track and the adjacent sections have the opposite magnetic field direction, and B-phase coil unit has the same configuration as A-phase coil unit with phase difference of 90°.

6. The two-phase, two-column linear pulse propulsion system according to claim 1 or claim 5, wherein the armature unit is provided by an iron core type coil in inclining section or deceleration section of a travelling track.

7. The two-phase, two-column linear pulse propulsion system according to claim 1 or claim 5, wherein the armature unit is laid underground or installed on the ground by a support.

8. The two-phase, two-column linear pulse propulsion system according to claim 1 or claim 5, wherein the power applied to the armature unit is direct pulse current or alternating current of a square wave or a sinusoidal wave.
